# EUROPÄISCHE PATENTSCHRIFT

(11) **EP 0 946 328 B1**
(45) Veröffentlichungstag und Bekanntmachung des Hinweises auf die Patenterteilung: **08.05.2002**
(21) Anmeldenummer: 97952001.2
(22) Anmeldetag: 28.11.1997
(51) Int. Cl.: B23C 3/05

(54) **WERKZEUG ZUR SPANABTRAGENDEN BEARBEITUNG VON BOHRUNGSOBERFLÄCHEN**
TOOL FOR MACHINING DRILL HOLE SURFACES BY CHIP REMOVAL
OUTIL POUR L'USINAGE PAR ENLEVEMENT DE COPEAUX DE SURFACES DE PER AGE

(30) Priorität: 29.11.1996 DE 19649568
(43) Veröffentlichungstag der Anmeldung: 06.10.1999
(73) Patentinhaber: MAPAL Fabrik für Präzisionswerkzeuge Dr. Kress KG, D-73431 Aalen (DE)
(72) Erfinder: KRESS, Dieter, D-73431 Aalen (DE); BECK, Hans, W., D-74889 Sinsheim (DE)
(74) Vertreter: Gleiss, Alf-Olav, Dr.jur. Dipl.-Ing.
(86) Internationale Anmeldenummer: EP9706643
(87) Internationale Veröffentlichungsnummer: WO9823404

(56) Entgegenhaltungen:
- DE-A- 4 125 106
- DE-A- 19 519 639
- DE-A- 19 605 156
- FR-A- 2 383 738
- US-A- 4 789 280

## Beschreibung

Die Erfindung betrifft ein Werkzeug zur spanabtragenden Bearbeitung von Werkstückoberflächen, insbesondere von Bohrungsoberflächen, mit mindestens zwei gegeneinander verlagerbaren Teilwerkzeugen, wobei das Werkzeug zur Bearbeitung der Werkstückoberflächen in Rotation versetzbar ist.

Werkzeuge der hier angesprochenen Art sind bekannt. Sie werden als Feedout- oder Aussteuerwerkzeuge bezeichnet. Die Relativbewegung der Teilwerkzeuge kann auf verschiedene Weise, beispielsweise durch eine Steuerstange, einen integrierten Elektromotor mit oder ohne Getriebe oder aber mit Hilfe des Schmier- oder Kühlmittels bewirkt werden. Bei herkömmlichen Werkzeugen wird das Schmier- beziehungsweise Kühlmittel in einem geschlossenen Kreislauf geführt, das heißt mehrfach verwendet. Es ist dabei nicht auszuschließen, daß Verunreinigungen des Kühlmittels in das Werkzeug gelangen und die Funktion des Werkzeugs beziehungsweise die Durchführung der Relativbewegung der beiden Teilwerkzeuge beeinträchtigen. Werkzeuge mit einer Steuerstange oder mit integrierten Elektromotoren sind aufwendig aufgebaut und groß, somit teuer.

Es ist daher Aufgabe der Erfindung, ein Werkzeug der eingangs genannten Art zu schaffen, das diese Nachteile nicht aufweist, also einfach aufgebaut und funktionssicher ist.

Zur Lösung dieser Aufgabe wird ein Werkzeug vorgeschlagen, das die in Anspruch 1 genannten Merkmale umfaßt. Grundsätzlich ist es bei der spanabtragenden Bearbeitung von Bohrungsoberflächen möglich, ein feststehendes Werkzeug einzusetzen, das in eine Bohrung eines rotierenden Werkstücks eingebracht wird. Bei dem hier vorgeschlagenen Werkzeug wird davon ausgegangen, daß das Werkzeug zur Bearbeitung der Bohrungsoberfläche in Rotation versetzbar ist. Es zeichnet sich dadurch aus, daß mindestens ein im wesentlichen senkrecht zur Drehachse des Werkzeugs verlagerbares Steuerelement vorgesehen ist, das bei einer Rotation des Werkzeugs aufgrund der Fliehkräfte verlagerbar ist. Es ist dabei möglich, daß das Steuerelement exakt radial, das heißt senkrecht zur Drehachse, verlagert wird. Es ist jedoch ausreichend, wenn zumindest eine Bewegungskomponente des Steuerelements im wesentlichen senkrecht zur Drehachse des Werkzeugs verläuft. Durch die Verlagerung des Steuerelements wird -vorzugsweise ab einer vorgebbaren Grenzdrehzahl- eine Relativbewegung eines Teilwerkzeugs gegenüber dem anderen bewirkt. Es zeigt sich also, daß die Relativbewegung der beiden Teilwerkzeuge allein aufgrund der bei einer Rotation des Werkzeugs auftretenden Fliehkräfte bewirkt werden kann. Das hier vorgeschlagene Werkzeug ist daher sehr einfach und störungsunanfällig aufgebaut, außerdem kostengünstig realisierbar.

Erfindungsgemäß besitzt das Werkzeug ein Federelement; welches mit dem Steuerelement zusammenwirkt. Das Federelement ist so ausgelegt, daß eine vorbestimmte Rückstellkraft auf das Steuerelement ausgeübt wird. Wenn also die vorgebbare Grenzdrehzahl unterschritten wird, wird die Relativbewegung des Teilwerkzeugs gegenüber dem anderen in entgegengesetzter Richtung durchgeführt.

Bevorzugt wird außerdem ein Ausführungsbeispiel des Werkzeugs, das sich dadurch auszeichnet, daß das Steuerelement mit einem Steuermedium zusammenwirkt und bei einer Verlagerung innerhalb des Werkzeugs eine Strömung dieses Mediums verursacht. Im Strömungspfad dieses Mediums ist ein hydraulischer Widerstand vorgesehen, mit dessen Hilfe eine gleichmäßige Strömung einstellbar ist. Durch die Beeinflussung der Strömung des Steuermediums kann eine gleichmäßige Bewegung des Steuerelements sichergestellt werden.

Bevorzugt wird weiterhin ein Ausführungsbeispiel des Werkzeugs, das sich dadurch auszeichnet, daß das Steuerelement unmittelbar eine Verlagerung des einen Teilwerkzeugs gegenüber dem anderen bewirkt. Es ergibt sich hier ein besonders einfacher Aufbau, der sehr wenig störanfällig ist.

Außerdem wird ein Ausführungsbeispiel des Werkzeugs bevorzugt, bei dem das Steuerelement über ein Medium, vorzugsweise über ein Fluid, eine Verlagerung des Teilwerkzeugs gegenüber dem anderen bewirkt.

Das Steuerelement ist also Teil eines Hydraulikkreises, der die Relativbewegung des einen Teilwerkzeugs gegenüber dem anderen ermöglicht.

Schließlich wird ein Ausführungsbeispiel des Werkzeugs bevorzugt, bei dem das Steuerelement Teil einer in das Werkzeug einsetzbaren Montageeinheit ist. Es ist damit möglich, Montageeinheiten mit verschiedenen Charakteristika einzusetzen, beispielsweise Steuerelemente verschiedener Größe beziehungsweise Masse, in den Hydraulikkreis eingebrachte Drosseln mit verschiedenen hydraulischen Widerständen und/oder Federelemente mit unterschiedlichen Rückstellkräften zu verwenden und damit das Werkzeug an verschiedene Einsatzfälle anzupassen. Das Werkzeug ist somit kostengünstig variierbar.

Weitere Ausgestaltungen ergeben sich aus den übrigen Unteransprüchen.

Die Erfindung wird im folgenden anhand der Zeichnung näher erläutert. Es zeigen:
- Figur 1: einen Längsschnitt durch ein erstes Ausführungsbeispiel eines Werkzeugs;
- Figur 2: einen Querschnitt durch das in Figur 1 dargestellte Werkzeug entlang der Linie II-II;
- Figur 3: einen Längsschnitt durch ein weiteres Ausführungsbeispiel eines Werkzeugs;
- Figuren 4 und 5: eine Teilansicht zweier weiterer Ausführungsbeispiele eines Werkzeugs in Längsschnitt und
- Figur 6: ein Werkzeug zur Ventilsitz- und Ventilführungsbearbeitung in einem Motorblock einer Brennkraftmaschine.

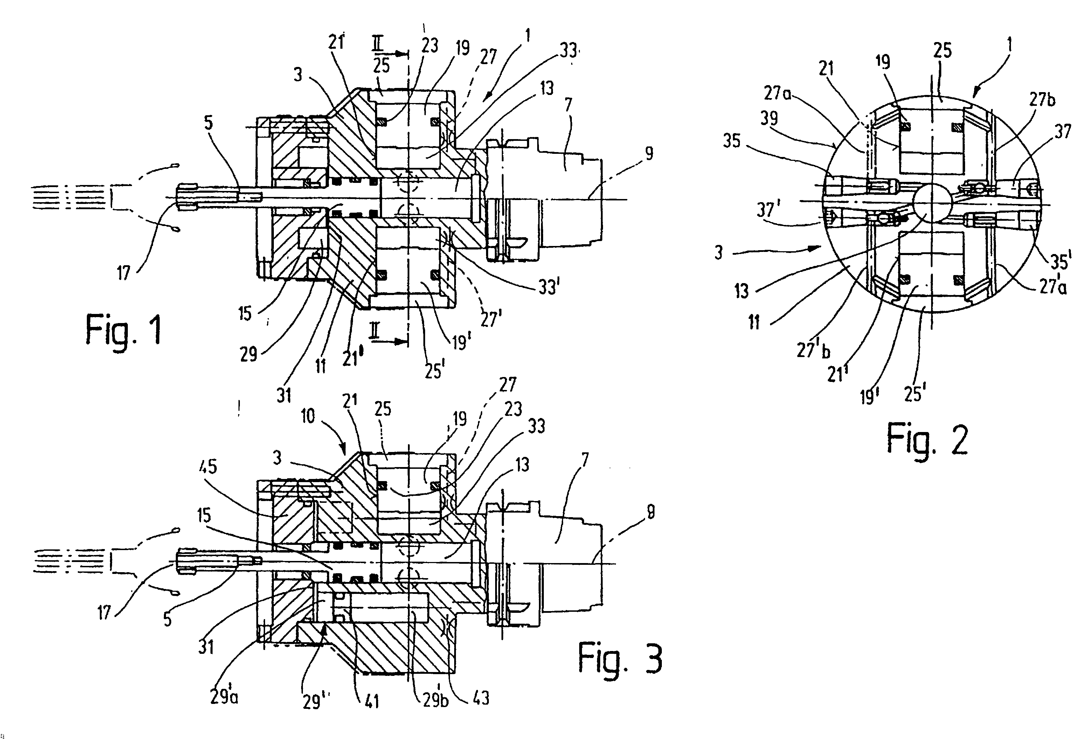

Das in Figur 1 dargestellte Werkzeug 1 umfaßt zwei Teilwerkzeuge, nämlich ein erstes Teilwerkzeug 3 und ein im Inneren dieses Werkzeugs verlagerbar angeordnetes zweites Teilwerkzeug 5. Das erste Teilwerkzeug ist hier beispielhaft mit einem beispielsweise als Hohlschaft-Kegel ausgebildeten Konus 7 versehen, der der Befestigung des Werkzeugs 1 beispielweise in einer Werkzeugmaschine oder auch in einem Adapter oder Zwischenstück dient. Das Werkzeug 1 wird zur Bearbeitung einer Werkstückoberfläche beziehungsweise Bohrungsoberfläche in Rotation versetzt. Die Drehachse 9 ist hier gestrichelt angedeutet. Im Grundkörper 11 des ersten Teilwerkzeugs 3 ist eine beispielsweise konzentrisch zur Drehachse 9 verlaufende erste Ausnehmung 13 vorgesehen, in der das zweite Teilwerkzeug 5 verlagerbar untergebracht ist. Bei dem hier dargestellten Ausführungsbeispiel verläuft die Relativbewegung des zweiten Teilwerkzeugs 5 gegenüber dem ersten Teilwerkzeug 3 im wesentlichen parallel zur Drehachse 9.

Das zweite Teilwerkzeug 5 weist an seinem einen Ende eine Kolbeneinrichtung 15 auf, die -gegebenenfalls unter Verwendung einer Dichtungseinrichtung- dichtend an der Innenfläche der Ausnehmung 13 anliegt und innerhalb der Ausnehmung verlagerbar ist. Durch eine Bewegung der Kolbeneinrichtung wird das zweite Teilwerkzeug 5 verlagert, es führt dabei eine translatorische Bewegung durch. In Figur 1 ist das zweite Teilwerkzeug 5 beziehungsweise die Kolbeneinrichtung 15 ganz nach links verlagert, so daß sich das zweite Teilwerkzeug 5 in einer ausgefahrenen Position befindet. Die Länge der Ausnehmung 13 ist so gewählt, daß bei einer entgegengesetzten Relativbewegung des zweiten Teilwerkzeugs 5 gegenüber dem ersten Teilwerkzeug 3 -in Figur 1 nach rechts- das freistehende Ende 17 des zweiten Teilwerkzeugs 5 mehr oder weniger in den Grundkörper 11 eingefahren werden kann und damit nicht mehr so weit über die Außenkontur des ersten Teilwerkzeugs 3 übersteht. Es ist lediglich eine Frage der Abstimmung der Lange des zweiten Teilwerkzeugs 5 mit der Länge der Ausnehmung 13, um ein mehr oder weniger weites Einfahren des zweiten Teilwerkzeugs 5 zu ermöglichen. Es ist also auch denkbar, das zweite Teilwerkzeug gänzlich in das Innere des ersten Teilwerkzeugs zurückzuziehen, so daß das freistehende Ende 17 nicht mehr über die Außenkontur des ersten Teilwerkzeugs 3 vorsteht.

In den Grundkörper 11 ist mindestens ein als Steuerelement 19 dienender Körper eingebracht. Beispielhaft sind hier zwei diametral gegenüberliegende Steuerelemente 19 und 19' vorgesehen. Die Steuerelemente sind in hier senkrecht zur Drehachse 9 verlaufenden zweiten Ausnehmungen 21 und 21' untergebracht, deren Abmessungen so gewählt sind, daß die hier beispielsweise zylindrisch ausgebildeten Steuerelemente 19 und 19' dichtend an der hier zylindrisch ausgebildeten Innenfläche der Ausnehmungen 21 und 21' anliegen. Es ist möglich, zusätzlich Dichtungselemente 23 und 23', beispielsweise O-Ringe, vorzusehen, die in die Außenfläche der Steuerelemente 19 und 19' eingebracht sind und für eine optimale Dichtung sorgen. Die Steuerelemente 19 und 19' sind in den Ausnehmungen 21 und 21' verschiebbar gelagert. Aufgrund ihres Eigengewichts beziehungsweise ihrer Masse werden die Steuerelemente 19, 19' bei einer Rotation des Werkzeugs 1 durch die Fliehkraft nach außen gedrängt. Sie gleiten daher innerhalb der Ausnehmungen 21, 21' nach außen, bis sie an die Ausnehmungen abschließende Deckel 25, 25' beziehungsweise an sonstige Anschlagmittel anstoßen.

Die Ausnehmungen 21, 21' sind mit einem Medium, vorzugsweise mit einem Fluid, insbesondere einem Hydrauliköl gefüllt, das bei einer Verlagerung der Steuerelemente 19, 19' uber einen geeigneten, in Figur 1 lediglich gestrichelt angedeuteten Verbindungspfad 27, 27' aus dem oberhalb des Steuerelements 19, 19' liegenden Bereich der Ausnehmung 21, 21' verdrängt wird. Der Verbindungspfad verbindet den oberhalb der Steuerelemente 19, 19' liegenden Bereich der Ausnehmung 21, 21' mit der Ausnehmung 13. Von den Steuerelementen 19, 19' verdrängtes Hydrauliköl gelangt also in die Ausnehmung 13. Durch den von den Steuerelementen aufgebauten Überdruck wird die Kolbeneinrichtung 15 und damit das zweite Teilwerkzeug 5 verlagert. Da der Verbindungspfad 27 in dem rechts von der Kolbeneinrichtung 15 liegenden Abschnitt der Ausnehmung 13 mündet, werden die Kolbeneinrichtung 15 und das zweite Teilwerkzeug 5 bei einem entsprechenden Überdruck nach links verlagert.

Das von den Steuerelementen 19, 19' verdrängte Medium dient hier also als Steuermedium, welches bei einem geeigneten Überdruck eine Ausfahrbewegung des zweiten Teilwerkzeugs 5 gegenüber dem ersten Teilwerkzeug 3 bewirkt. Das Steuermedium ist vollständig im Inneren des Werkzeugs 1 eingeschlossen und steht hier nicht mit anderen Medien in Verbindung, die im Betrieb des Werkzeugs verwendet werden. Das Steuermedium ist also von Kühl- und Schmiermitteln getrennt, so daß die Funktion der Steuerelemente nicht von Verunreinigungen beeinträchtigt wird, die sich in diesen Medien befinden können. Damit wird eine sehr hohe Funktionssicherheit erreicht.

In den Grundkörper 11 des ersten Teilwerkzeugs 3 ist noch mindestens ein in Fluidverbindung mit der Ausnehmung 13 stehender Ausgleichsraum 29 eingebracht, der beispielsweise als durchgehender Ringraum ausgebildet ist oder einzelne Teilräume umfaßt. Die Fluidverbindung 31 zwischen dem Ausgleichsraum 29 und der Ausnehmung 13 dient dazu, ein aus dem links von der Kolbeneinrichtung 15 liegenden Abschnitt der Ausnehmung 13 verdrängtes Medium aufzunehmen. Beispielsweise kann ein gasförmiges Medium in den Ausgleichsraum 29 eingebracht werden, welches bei einer Bewegung der Kolbeneinrichtung 15 nach links über die Fluidverbindung 31 in den Ausgleichsraum 29 gedrängt und dort komprimiert wird.

Das komprimierte Medium dient damit quasi als Federelement, welches eine vorbestimmbare Rückstellkraft auf die Kolbeneinrichtung 15 ausübt und diese entgegen der Ausfahrbewegung nach rechts drängen möchte. Durch die hydraulische Kopplung der Kolbeneinrichtung 15 mit den Steuerelementen 19 und 19' wirkt die Rückstellkraft des Federelements, also des im Ausgleichsraum 29 komprimierten Gases, auch auf die Steuerelemente 19 und 19': Die Rückstellkraft drängt die Kolbeneinrichtung 15 nach rechts und baut daher einen Überdruck in dem Teil der Ausnehmung 13 auf, der rechts von der Kolbeneinrichtung 15 liegt. Über den Verbindungspfad 27 wird dieser Druck auf die Oberseite der Steuerelemente 19, 19' übertragen, so daß die Steuerelemente radial nach innen in Richtung zur Drehachse 9 gedrängt werden.

Das im Ausgleichsraum 29 vorhandene Gas kann unter einem bestimmten Überdruck vorliegen, so daß eine vorbestimmte Rückstellkraft auf das Steuerelement beziehungsweise die Steuerelemente wirkt. Diese können in diesem Fall erst ab einer vorgegebenen Grenzdrehzahl des Werkzeugs 1 eine Verlagerung nach außen durchführen und damit das oberhalb der Steuerelemente 19, 19' vorhandene Medium über der Verbindungspfad 27 in den rechten Bereich der Ausnehmung 13 verdrängen.

Der unterhalb der Steuerelemente 19, 19' liegende Freiraum 33 beziehungsweise 33' kann mit einem Gas gefüllt sein, das über eine geeignete, vorzugsweise mit einer Filtereinrichtung versehene Leitung mit dem Atmosphärendruck in Verbindung steht. Zumindest ist sichergestellt, daß in dem Bereich zwischen der Drehachse 9 und der Unterseite der Steuerelemente 19, 19' kein so hoher Überdruck herrscht, daß das zweite Teilwerkzeug 5 ohne eine Rotation des Werkzeugs 1 ausgefahren wird.

Aus Figur 2 ist ersichtlich, daß der Verbindungspfad 27 zwei Teilpfade 27a und 27b beziehungsweise 27'a und 27'b aufweist, die mit dem radial außen liegenden Teilbereich der Ausnehmung 21 beziehungsweise 21' und der Ausnehmung 13 in Fluidverbindung stehen.

Bei dem hier dargestellten Ausführungsbeispiel ist der erste Teilpfad 27a beziehungsweise 27'a mit einem als Drossel 35 beziehungsweise 35' ausgebildeten hydraulischen Widerstand und der Teilpfad 27b, 27'b mit einem Rückschlagventil 37 beziehungsweise 37' versehen. Durch diese Ausgestaltung ist es moglich, die bei einer Bewegung der Steuerelemente 19, 19' gegebene Strömung des Steuermediums zwischen der Ausnehmung 21, 21' und der Ausnehmung 13 zu beeinflussen. Vorzugsweise ist vorgesehen, daß bei einer Strömung des Steuermediums aus den Ausnehmungen 21, 21' in die Ausnehmung 13 die Drossel 35, 35' wirkt und damit ein gleichmäßiger Medienstrom beziehungsweise eine gleichmäßige Ausfahrbewegung des zweiten Teilwerkzeugs 5 gegenüber dem ersten Teilwerkzeug 3 gegeben ist, während bei einer entgegengesetzten Bewegung durch das Rückschlagventil, das im ersteren Fall geschlossen ist, ein freier Ablauf des Mediums aus der ersten Ausnehmung in die Ausnehmungen 21, 21' gewährleistet ist. Dieser freie Ablauf stellt sicher, daß die Rückfahrbewegung des zweiten Teilwerkzeugs 5 ungehindert und schnell erfolgen kann.

Bei einer Ausfahrbewegung des zweiten Teilwerkzeugs 5 wird, wie oben gesagt, die Kolbeneinrichtung 15 durch den im Steuermedium beziehungsweise im rechten Teil der Ausnehmung 13 aufgebauten Druck nach links verlagert, so daß das links von der Kolbeneinrichtung 15 vorhandene Medium in den Ausgleichsraum 29 verdrängt wird. Hier entsteht durch die Kompression des gasförmigen Mediums ein steigender Überdruck beziehungsweise eine zunehmende Rückstellkraft. Dennoch ist eine gleichmäßige Ausfahrbewegung des zweiten Teilwerkzeugs 5 deshalb gegeben, weil bei einer radialen Ausfahrbewegung der Steuerelemente 19 und 19' durch die zunehmende Distanz zur Drehachse 9 wachsende Fliehkräfte aufgebaut werden. Durch die größeren Kräfte, die die Steuerelemente 19 und 19' immer stärker nach außen drängen, nimmt auch der Druck oberhalb der Steuerelemente 19, 19' in den Ausnehmungen 21, 21' und damit in der Ausnehmung 13 zu, was zu einer erhöhten Kraft in Richtung der Ausfahrbewegung des Teilwerkzeugs 5 führt.

Figur 2 zeigt, daß der Verbindungspfad 27 beziehungsweise die Teilpfade 27a, 27b, 27'a, 27'b durch in den Grundkörper 11 des ersten Teilwerkzeugs 3 eingebrachte Bohrungen realisierbar ist, und daß auch die Drosseln 35, 35' und Rückschlagventile 37, 37' in entsprechende Bohrungen eingebracht sind, die die Bohrungen der Teilpfade schneiden. Die Art der Realisierung des Verbindungspfades 27 ist letztlich bekannt, so daß hier nicht näher darauf eingegangen zu werden braucht. Wesentlich ist lediglich, daß der obere beziehungsweise der radial äußere Bereich der Ausnehmungen 21 und 21' in Fluidverbindung stehen mit der Ausnehmung 13, so daß bei einer Ein- und Ausfahrbewegung der Steuerelemente 19, 19' das Steuermedium einerseits von den Ausnehmungen 21 und 21' zur Ausnehmung 13 und andererseits in umgekehrter Richtung strömen kann.

Bei der hier dargestellten Ausführungsform sind die Drosseln 35, 35' und Rückschlagventile 37, 37' in Bohrungen untergebracht, die die Umfangsfläche 39 des Werkzeugs 1 beziehungsweise des Teilwerkzeugs 3 schneiden. Das heißt, diese eingebauten Teile sind von außen zugänglich. Es ist also moglich, die Drosseln variabel auszubilden und einen einstellbaren Hydraulikwiderstand zu realisieren. Denkbar ist es auch, die Rückschlagventile so auszubilden, daß diese bei verschiedenen Druckwerten öffnen und schließen. Es ist also möglich, das Werkzeug 1 auf verschiedene Einsatzfälle abzustimmen.

Figur 3 zeigt ein abgewandeltes Ausführungsbeispiel eines Werkzeugs 10, das grundsätzlich identisch aufgebaut ist wie das in Figur 1 dargestellte. Gleiche Teile sind mit gleichen Bezugsziffern versehen, so daß insofern auf die Beschreibung zu Figur 1 verwiesen werden kann.

Eine Abweichung im Aufbau ergibt sich lediglich bezüglich des Ausgleichsraums 29'. Der Längsschnitt durch das Werkzeug 10 ist hier so gelegt, daß dieser unterhalb der Drehachse 9 in einer anderen Ebene verläuft als oberhalb der Drehachse. Dennoch ist hervorzuheben, daß auch bei dem Werkzeug 10 zwei einander gegenüberliegende Steuerelemente 19 und 19' vorhanden sind, wie dies anhand von Figur 1 erläutert wurde. Versetzt zu der Ebene, innerhalb derer die Steuerelemente 19 und 19' liegen, ist hier der Ausgleichsraum 29' vorgesehen, der hier allerdings zwei Abschnitte, einen Abschnitt 29'a und einen Abschnitt 29'b umfaßt. Einer der Abschnitte, hier der linke Abschnitt 29'a, ist über eine Fluidverbindung 31 mit einem Bereich der Ausnehmung 13 verbunden, der links von der Kolbeneinrichtung 15 angeordnet ist. Wird also die Kolbeneinrichtung 15 beziehungsweise das zweite Teilwerkzeug 5 durch einen auf Fliehkräfte beruhenden Überdruck im rechten Teil der Ausnehmung 13 nach links verlagert, so verdrängt die Kolbeneinrichtung 15 das links von dieser liegende Medium über die Fluidverbindung 31 in den linken Abschnitt 29'a des Ausgleichsraums 29'. Es kann auch hier vorgesehen sein, daß im linken Abschnitt 29'a ein -als Federelement wirkendes- gasförmiges Medium vorhanden ist. Bevorzugt wird jedoch eine Ausführungsform, bei der im linken Abschnitt 29'a ein Fluid, beispielsweise Hydrauliköl, vorgesehen ist, da somit Abdichtungsprobleme an der Kolbeneinrichtung 15 leichter zu bewältigen sind als bei einem gasförmigen Medium. Um eine Bewegung der Kolbeneinrichtung 15 nach links zu ermöglichen, ist bei einer derartigen Ausgestaltung, also bei der Verwendung eines Fluids, im rechten Abschnitt 29'b des Ausgleichsraums ein als Federelement wirkendes Gasvolumen vorgesehen, das bei einer Bewegung der Kolbeneinrichtung 15 nach links durch das in den Ausgleichsraum 29' verdrängte Fluid komprimiert wird. Der linke Abschnitt 29'a ist hier vom rechten Abschnitt 29'b durch einen Kolben 41 getrennt. Dieser kann auch Teil einer herkömmlichen Gasdruckfeder sein, die ein Gasvolumen umfaßt, welches durch das von der Kolbeneinrichtung 15 verdrängte Fluid komprimiert wird. Der Ausgleichsraum 29' ist hier zylindrisch ausgebildet. Seine Mittelachse 43 verläuft im wesentlichen parallel zur Drehachse 9. Das Werkzeug 10 kann -wie das Werkzeug 1- mit einem Deckel 45 versehen sein, der abnehmbar ist und damit einen Austausch der Gasdruckfeder ermöglicht.

Das in Figur 3 dargestellte Ausführungsbeispiel zeichnet sich dadurch aus, daß die Kolbeneinrichtung 15 auf beiden Seiten mit einem flüssigen Medium, insbesondere Hydrauliköl, beaufschlagt sein kann, wobei das rechts von der Kolbeneinrichtung vorhandene Steuermedium über den Verbindungspfad 27 mit den Ausnehmungen 21, 21' und damit mit den Steuerelementen 19, 19' zusammenwirkt, während das links von der Kolbeneinrichtung 15 vorhandene Ol mit einem Federelement beziehungsweise einer Gasdruckfeder zusammenwirkt, die eine Rückstellkraft auf die Kolbeneinrichtung 15 und damit auf die Steuerelemente 19, 19' ausübt.

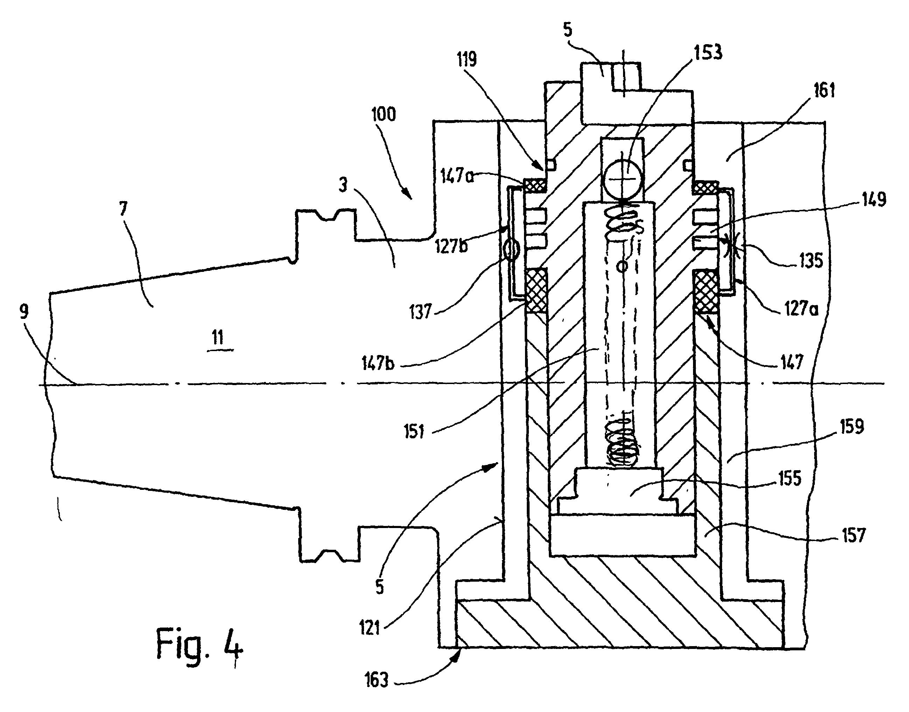

Figur 4 zeigt einen Teil eines weiteren Ausführungsbeispiels eines Werkzeugs 100 mit einem ersten Teilwerkzeug 3 und einem zweiten gegenüber diesem verlagerbaren Teilwerkzeug 5. Das Werkzeug 100 weist einen Konus 7 auf, der, wie anhand von Figur 1 erläutert, der Befestigung des Werkzeugs und dessen Antrieb dient.

Das zweite Teilwerkzeug 5 ist bei einer Rotation des ersten Teilwerkzeugs 3 im wesentlichen in radialer Richtung, das heißt senkrecht zur Drehachse 9, verlagerbar. Zumindest verläuft eine Teilkomponente der Bewegung des Teilwerkzeugs in radialer Richtung. Dieses Teilwerkzeug ist beispielsweise für die Einbringung von Nuten in Bohrungsoberflächen aber auch zum Plandrehen verwendbar.

Das Werkzeug 100 weist ein Steuerelement 119 auf, welches in einer senkrecht zur Drehachse 9 verlaufenden Ausnehmung 121 innerhalb des Werkzeugs 100 beweglich gelagert ist. Bei der Darstellung in Figur 4 befindet sich das Steuerelement 119 in seiner radial äußersten, das heißt in seiner ausgefahrenen Position.

Das Steuerelement 119 wirkt mit einem auch als Steuermedium bezeichneten Medium, hier mit einem Hydrauliköl, zusammen. Dieses befindet sich in einem Steuerraum 147, der zwei voneinander getrennte Abschnitte 147a und 147b umfaßt. Der Steuerraum umgibt hier das Steuerelement 119 ringförmig. Er wird durch eine vom Steuerelement 119 ausgehende Ringschulter 149 in die beiden Abschnitte 147a und 147b unterteilt. Die Abschnitte 147a, 147b sind hydraulisch miteinander verbunden. Ein Verbindungspfad 127 zwischen den beiden Abschnitten 147a und 147b weist einen ersten Teilpfad 127a auf, in dem eine als hydraulischer Widerstand wirkende Drossel 135 vorgesehen ist, außerdem einen Teilpfad 127b, in dem ein Rückschlagventil 137 vorgesehen ist. Der Steuerraum 147 ist so ausgebildet, daß bei einer radialen Auswartsbewegung des Steuerelements 119 das Steuermedium aus dem radial außen liegenden Abschnitt 147a des Steuerraums 147 über den Verbindungspfad 127 in den radial weiter innen liegenden Abschnitt 147b verdrängt wird. Die Strömung des Steuermediums wird durch die Drossel 135 und durch das Rückschlagventil 137 so beeinflußt, daß eine radiale Auswärtsbewegung des Steuerelements 119 durch die Einwirkung der Drossel gebremst und damit vergleichmäßigt wird. Eine entgegengesetzte Einfahrbewegung des Steuerelements 119 kann ohne den Widerstand der Drossel erfolgen, da dann das Ruckschlagventil 147 öffnet und den Rücklauf des Steuermediums vom Abschnitt 147 zum Abschnitts 147a des Steuerraums 147 praktisch nicht behindert.

Das Steuerelement 119 wirkt mit einem eine Rückstellkraft auf das Steuerelement 119 ausübenden Federelement 151 zusammen, das sich einerseits an einem gegenüber dem Steuerelement 119 feststehenden Widerlager 153 abstützt und andererseits an einem Widerlager, das durch einen Abschlußdeckel 155 des Steuerelements 119 gebildet wird. Das Federelement 151 ist hier im Inneren des Steuerelements 119 untergebracht. Es ist in Figur 4 lediglich beispielhaft als Schraubenfeder angedeutet; auch hier kann eine übliche Gasdruckfeder als Federelement verwendet werden. Es bewirkt eine Rückstellkraft, die der Ausfahrbewegung des Steuerelements 119 entgegenwirkt und dieses in Richtung seiner eingefahrenen Position drängt. Durch die Rückstellkraft des Federelements 151 wird während einer Rückfahrbewegung des Steuerelements 119 das Steuermedium von dem Abschnitt 147b über das Rückschlagventil 137 in den Abschnitt 147a des Steuerraums 147 gefördert.

Bei dem in Figur 4 dargestellten Ausführungsbeispiel erstreckt sich das Steuerelement 119 über die Drehachse 9 des Werkzeugs 100 hinweg. Es ist jedoch sichergestellt, daß der hier angedeutete Schwerpunkt S des Steuerelements 119 in einem Abstand zur Drehachse 9, hier oberhalb dieser Drehachse angeordnet ist. Wird also das Werkzeug 100 in Rotation versetzt, so wirken Fliehkräfte auf das Steuerelement 119, die schließlich entgegen der Wirkung des Federelements 115 eine radiale Auswärtsbewegung des Steuerelements 119 bewirken.

Das Steuerelement 119 wird von einer inneren Hülse 157 umgeben, die hier die untere Begrenzung des Steuerraums 147 bildet und die von einer äußeren zweiten Hülse 159 umgeben ist, die die äußere Begrenzung des Steuerraums 147 bildet. In Figur 4 schließt sich oben an die äußere Hülse 159 ein Abschlußring 161 an, der den Steuerraum 147 oben begrenzt und der auch Teil der Hülse 159 sein kann. Bei dem hier dargestellten Ausführungsbeispiel ist der Verbindungspfad 127 als Kanal in der äußeren Hülse 159 realisiert. Es ist aber sehr wohl möglich, den Verbindungspfad 127 sowie das Rückschlagventil und die Drossel im Inneren beziehungsweise im Grundkörper des Steuerelements 119 unterzubringen. Dies hat den Vorteil, daß eine sehr kompakte Bauform realisierbar ist.

Der Abschlußring 161 liegt dichtend an dem Steuerelement 119 an und ist so ausgebildet, daß eine Relativbewegung des Steuerelements 119 gegenüber dem Abschlußring und gegenüber der äußeren Hülse 159 möglich ist. Das Steuerelement 119 ist außerdem verschieblich gegenüber der inneren Hülse 157 gelagert.

Die Hülsen und der Abschlußring sind so ausgebildet, daß diese das Steuerelement 119 aufnehmen und damit eine Montageeinheit 163 bilden, die als Ganzes in den Grundkörper 11 des Werkzeugs 100 einsetzbar ist. Auf diese Weise ist die Montageeinheit leicht austauschbar. Eine derartige Montageeinheit 163 kann als voll funktionsfähiger, separater Einsatz in bestehende Werkzeuge eingesetzt werden, so daß diese ein fliehkraftbetätigtes Teilwerkzeug aufweisen.

Im übrigen ist es sehr wohl möglich, die Montageeinheit 163 beziehungsweise das Steuerelement 119 so klein auszubilden, daß sie/es -anders als in Figur 4 dargestellt- sich nicht über die Drehachse 9 hinweg erstreckt.

Bei dem hier dargestellten Ausführungsbeispiel ist das zweite Teilwerkzeug 5 im radial außenliegenden Bereich des Steuerelements 119 vorgesehen. Das heißt, das zweite Teilwerkzeug 5 ist unmittelbar am Steuerelement 119 angebracht.

Durch die Kopplung des zweiten Teilwerkzeugs 5 mit dem Steuerelement 119 ist es möglich, das zweite Teilwerkzeug 5 gegenüber dem ersten Teilwerkzeug 3 zu verlagern. Die Verlagerung beziehungsweise Relativbewegung der beiden Teilwerkzeuge erfolgt in Abhängigkeit von der Drehgeschwindigkeit des Werkzeugs 100 und von den auf das Steuerelement 119 wirkenden Fliehkräften, wobei die bei der Verlagerung des Steuerelements 119 gegebene Strömung des Steuermediums in Verbindungspfad 127 durch die Drossel 135 und durch das Rückschlagventil 137 beeinflußt werden, was zu einer Rückwirkung auf die Relativbewegung des zweiten Teilwerkzeugs 5 fuhrt. Dieses führt aufgrund der Wirkung der Drossel 135 eine definierte Auswärtsbewegung durch, vorzugsweise eine gleichmäßige, langsame Relativbewegung. Die bei reduzierter Drehzahl des Werkzeugs gegebene Einwärtsbewegung kann unter Einwirkung des Federelements 151 und aufgrund des Rückschlagventils 137 rasch erfolgen.

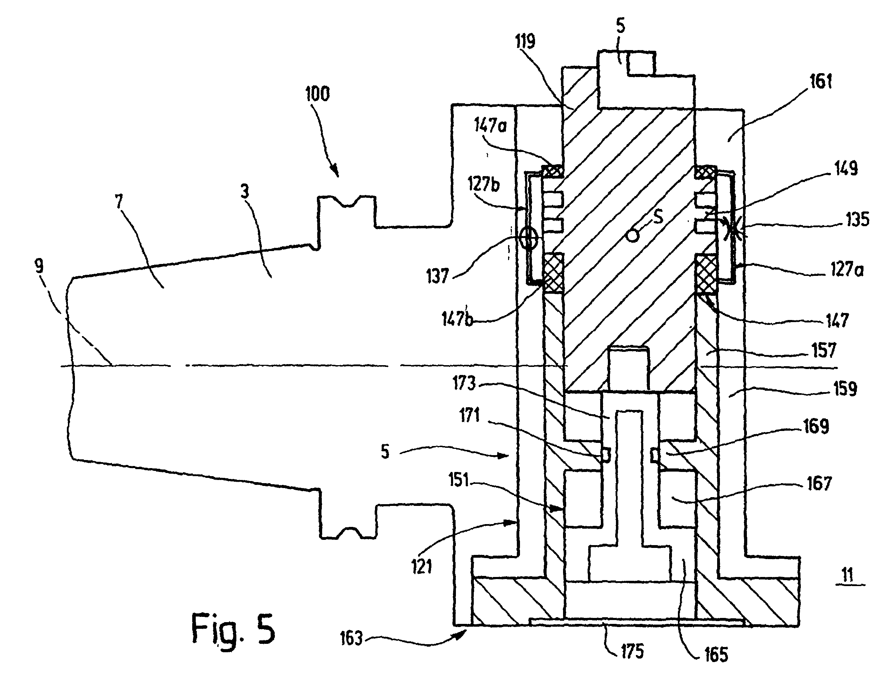

Figur 5 zeigt wiederum einen Teil eines Werkzeugs 100, das im wesentlichen so aufgebaut ist, wie das in Figur 4 gezeigte. Gleiche Teile werden daher mit gleichen Bezugsziffern versehen. Insofern wird auch auf die Beschreibung zu Figur 4 verwiesen.

Das Werkzeug 100 weist ein erstes Teilwerkzeug 3 und ein zweites Teilwerkzeug 5 auf, das wiederum mit einem Steuerelement 119 fest verbunden ist. Das Steuerelement bewegt sich bei einer Rotation des Werkzeugs 1 -vorzugsweise ab einer bestimmten Grenzdrehzahl- nach außen, wodurch ein Steuermedium, nämlich Hydrauliköl, von einem ersten Abschnitt 147a über einen Verbindungspfad 127 zu einem zweiten Abschnitt 147b eines Steuerraums 147 gefördert wird. Bei Unterschreiten der Drehzahl wird das Steuerelement 119 von einem Federelement 151' zurückverlagert beziehungsweise in Richtung zur Drehachse 9 zurückbewegt.

Bei der Darstellung gemäß Figur 5 befindet sich das Steuerelement 119 und damit das zweite Teilwerkzeug 5 in seiner radial äußeren, das heißt ausgefahrenen Position.

Das Federelement 151 weist hier einen Kolben 165 auf, der an dem dem zweiten Teilwerkzeug 5 gegenüberliegenden Ende des Steuerelements 119 befestigt ist und eine der Fliehkraft entgegenwirkende Rückstellkraft aufbaut. Dazu wirkt der Kolben mit einem Gasvolumen 167 zusammen, das zwischen dem Kolben und einer Abschlußwand 169 eingeschlossen ist, die von der ersten Hülse 157 ausgeht, zwischen dem Kolben 165 und dem Steuerelement 119 angeordnet ist und auf geeignete Weise, beispielsweise über eine Dichtungseinrichtung 171 einen druckdichten Abschluß des Gasvolumens 167 sicherstellt. Das komprimierte Gasvolumen 167 drängt den Kolben 165 von der Drehachse 9 weg. Da der Kolben 165 über ein Verbindungsglied 173 mit dem Steuerelement 119 verbunden ist, zieht der Kolben 165 das Steuerelement 119 in dieselbe Richtung, so daß das zweite Teilwerkzeug 5 auf dem Steuerelement 119 in Richtung zur Drehachse 9 bewegt wird. Das Federelement 151 erzeugt also eine Rückstellkraft, die der bei einer Rotation des Werkzeugs 100 auftretenden Fliehkraft entgegenwirkt. Die Rückstellkraft ist so gewählt, daß ab einer bestimmten Grenzdrehzahl die auf das Steuerelement 119 wirkende Fliehkraft größer als die Rückstellkraft ist, so daß eine Verlagerung des in einem Abstand zur Drehachse 9 gelegenen Schwerpunkts S des Steuerelements 119 radial nach außen erfolgt. Somit wird auch das fest mit dem Steuerelement 119 verbundene zweite Teilwerkzeug 5 gegenüber dem ersten Teilwerkzeug 3 in radialer Richtung verlagert.

Auch bei dem in Figur 5 dargestellten Ausführungsbeispiel sind Hülsen 157 und 159 vorgesehen, die das Steuerelement 119 umgeben und die gemeinsam mit einem Abschlußring 161 eine Montageeinheit 163 bilden, die bei Bedarf ausgetauscht werden kann. Es ist im übrigen möglich, Montageeinheiten mit verschieden ausgebildeten hydraulischen Widerständen beziehungsweise Drosseln 135 vorzusehen, um die Bewegung, insbesondere Auswärtsbewegung des zweiten Teilwerkzeugs 5 zu beeinflussen. Auch ist es möglich, Steuerelemente 119 mit verschiedenen Massen einzusetzen, so daß die nach außen wirkenden Kräfte bei einer Rotation des Werkzeugs 100 auf verschiedene Einsatzfälle des Werkzeugs abgestimmt werden können. Im übrigen kann die Montageeinheit 163 so klein ausgebildet sein, daß sie nicht über die Drehachse 9 hinwegreicht.

Bei dem in Figur 5 dargestellten Ausführungsbeispiel ist der Verbindungspfad 127 mit den Teilpfaden 127a und 127b gemeinsam mit dem Ruckschlagventil 137 und der Drossel 135 in der Hülse 159 untergebracht. Aber auch hier ist -wie anhand von Figur 4 erläutert- eine Verlagerung in den Grundkörper des Steuerelements 119 möglich, so daß sich eine sehr kompakte Bauform beziehungsweise Montageeinheit 163 ergibt.

Aus der Darstellung in Figur 5 wird deutlich, daß das Federelement 151 als Gasdruckfeder realisierbar ist, die ein unter Druck stehendes Gasvolumen 167 umfaßt. Die Gasdruckfeder ist unter einem entfernbaren Deckel 175 angeordnet, das heißt, die Gasdruckfeder ist auch im eingebauten Zustand der Montageeinheit 163 letztlich zugänglich. Es ist also möglich, über geeignete, bekannte Ventileinrichtungen den Druck des Gasvolumens 167 einzustellen und gegebenenfalls zur Steigerung des gewünschten Drucks Gas nachzufüllen.

Nach allem wird ohne weiteres deutlich, daß bei dem anhand der Figuren 1 bis 3 erläuterten Werkzeugtyp unter Ausnutzung der Fliehkräfte bei Rotation des Werkzeugs eine im wesentlichen in Richtung der Drehachse 9 erfolgende axiale Verlagerung beziehungsweise Relativbewegung der beiden Teilwerkzeuge 3 und 5 erfolgt. Dagegen ist bei den in den Figuren 4 und 5 dargestellten Werkzeugen 100 vorgesehen, daß aufgrund der bei Rotation des Werkzeugs auftretenden Fliehkräfte eine radiale Verlagerung des zweiten Teilwerkzeugs 5 gegenüber dem ersten Teilwerkzeug 3 gegeben ist.

Betrachtet man die Figuren 1 bis 5, so ist ohne weiteres ersichtlich, daß innerhalb eines einzigen Werkzeugs sowohl eine axiale Verlagerung als auch eine radiale Relativbewegung von Teilwerkzeugen zueinander realisiert werden kann. Es ist im übrigen denkbar, die radiale Verlagerung eines Steuerlements, an dem ein Teilwerkzeug befestigt ist (siehe Figuren 4 und 5), dazu auszunutzen, ein weiteres Teilwerkzeug in axialer Richtung zu verlagern. Es ist also beispielsweise möglich, den radial außen liegenden Abschnitt 147a des Steuerraums über einen hydraulischen. Verbindungspfad mit einer Ausnehmung 13 zu verbinden, wie sie anhand der Figuren 1 bis 3 erläutert wurde. Wird bei einer derartigen Bauform bei Auswärtsbewegung des radial beweglichen Steuerelements 119 ein Steuermedium aus dem radial außen liegenden Abschnitt 147a verdrängt, so gelangt das Steuermedium über den Verbindungspfad in die Ausnehmung 13 und bewirkt damit eine axiale Verlagerung des zweiten Teilwerkzeugs , das anhand der Figuren 1 bis 3 erläutert wurde.

Der axiale Verlagerungsweg des Teilwerkzeugs kann durch das von dem Steuerelement verdrängte Volumen, also beispielsweise durch die Differenz des Außendurchmessers der Ringschulter 149 zum Außendurchmesser des Steuerelements 119 und durch den Durchmesser der Ausnehmung 13 bestimmt werden. Bei einem großen von dem Steuerelement verdrängten Volumen des Steuermediums und bei einem relativ kleinen Durchmesser der Ausnehmung 13 ergibt sich ein relativ großer axialer Verlagerungsweg des Teilwerkzeugs 5 des anhand der Figuren 1 bis 3 erlauterten Werkzeugs 1 beziehungsweise 10.

Aufgrund der bislang beschriebenen Funktionsweise des zwei Teilwerkzeuge aufweisenden Werkzeugs wird deutlich, daß neben einer axialen Verlagerung, die anhand der Figuren 1 bis 3 erläutert wurde, gleichzeitig auch eine Verlagerung eines Teilwerkzeugs unter einem beliebigen Winkel zur Drehachse 9 des Werkzeugs 1 beziehungsweise 10 möglich ist. Auch ist es sehr wohl möglich, mit Hilfe des von einem Steuerelement verdrängten Steuermediums mehrere Teilwerkzeuge in verschiedenen Richtungen auszufahren.

In allen Fällen ist sichergestellt, daß die Relativbewegung des/der Teilwerkzeugs/Teilwerkzeuge in einer Richtung mit Hilfe eines hydraulischen Widerstandes beziehungsweise mittels einer Drossel so beeinflußt wird, daß eine möglichst gleichmäßige definierte Vorschubbewegung erzeugt wird, während die entgegengesetzte Rückholbewegung aufgrund eines Rückschlagventils relativ rasch erfolgen kann, wobei hier ein geeignetes Federelement entsprechende Rückstellkräfte erzeugt.

Für die Funktion des Werkzeuges ist belanglos, ob das Steuerelement unmittelbar eine Verlagerung des zweiten Teilwerkzeugs bewirkt, wie dies anhand der Figuren 4 und 5 erläutert wird, oder ob -wie anhand der Figuren 1 bis 3 dargestellt- ein Steuermedium zwischengeschaltet wird, welches die auf der Fliehkraft beruhende Bewegung des Steuerelements auf eine Kolbeneinrichtung überträgt, die eine Relativbewegung des zweiten fliehkraftbetatigten Teilwerkzeugs 5 hervorruft.

Die Rückstellkräfte können unmittelbar auf das Steuerelement wirken oder aber über eine mechanische oder, wie anhand der Figuren 1 bis 3 erläutert, hydraulische Kopplung von einer Kolbeneinrichtung auf das Steuerelement übertragen werden.

Durch die Wahl der Masse des Steuerelements beziehungsweise durch die Anordnung von dessen Schwerpunkt gegenüber der Drehachse eines Werkzeugs können die bei einer Drehung des Werkzeugs auftretenden Fliehkräfte so eingestellt werden, daß die von dem Steuerelement aufgebrachten Krafte zur Verlagerung eines Teilelements eines Werkzeugs vorbestimmbar sind. Da das Steuerelement mit einem Federelement zusammenwirkt, welches direkt oder indirekt eine Rückstellkraft auf das Steuerelement ausübt, kann eine Grenzdrehzahl definiert werden, bei deren Überschreitung eine Relativbewegung des Steuerelements und damit des zugehörigen Teilwerkzeugs eingeleitet wird. Die Grenzdrehzahl ist nach allem relativ einfach vorbestimmbar. Es ist sogar möglich, diese bei bestehenden Werkzeugen zu variieren, beispielsweise bei Einsatz von Gasdruckfedern, deren Druck von außen einstellbar ist.

Allen Ausführungsbeispielen ist gemeinsam, daß das Steuerelement allein aufgrund von Fliehkräften verlagerbar ist, was zu einer auf den Fliehkräften beruhenden Relativbewegung der beiden Teilwerkzeuge 3 und 5 beziehungsweise einer Fliehkraftbetätigung des Teilwerkzeugs 5 führt. Der Aufbau der Werkzeuge ist also sehr einfach und damit kostengünstig realisierbar.

Die Relativbewegung der Teilwerkzeuge zueinander kann bei den verschiedensten Anwendungsfällen ausgenutzt werden. Es ist also nicht erforderlich, daß beide Teilwerkzeuge der spanabtragenden Bearbeitung dienen. Denkbar ist es auch, daß eines der Teilwerkzeuge lediglich der Führung des Werkzeugs gegenüber dem zu bearbeitenden Werkstück oder der Halterung des zweiten Teilwerkzeugs dient.

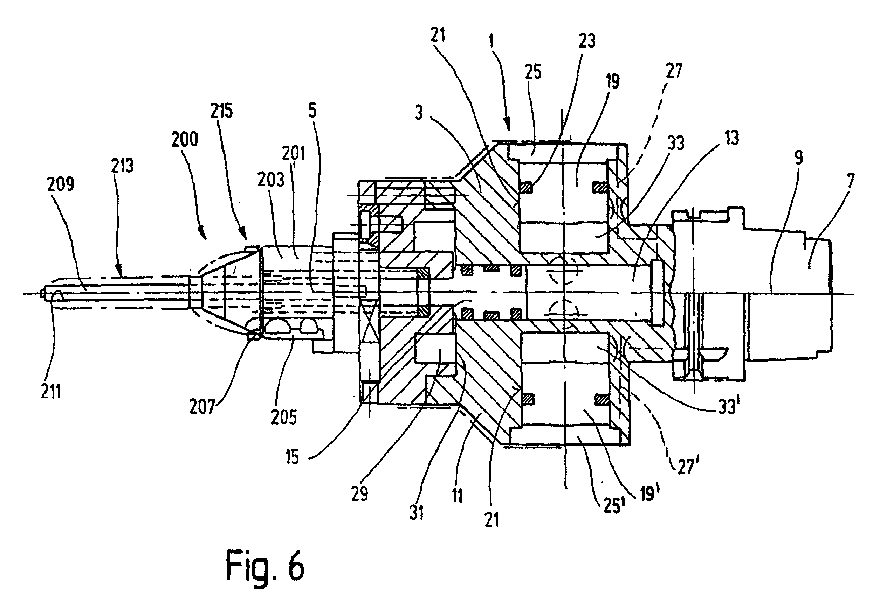

Besonders bewährt hat sich das Werkzeug im Zusammenhang mit der Bearbeitung von Ventilsitzen und Ventilführungen im Motor einer Brennkraftmaschine. Ein derartiges Werkzeug ist in Figur 6 dargestellt. Die Figur 6 zeigt das Werkzeug 1, welches anhand der Figuren 1 und 2 im einzelnen erläutert wurde. Gleiche Teile sind daher mit gleichen Bezugsziffern versehen. Es wird insofern auf die Beschreibung zu den Figuren 1 und 2 verwiesen. Auf das Teilwerkzeug 3 des Werkzeugs 1 ist ein Spezialwerkzeug 200 aufgesetzt, das grundsätzlich bekannt ist. Es wird daher im folgenden nur auf die wesentlichen Teile und Funktionen eingegangen. Das Spezialwerkzeug weist einen ersten, fest mit dem Teilwerkzeug 3 verbundenen Werkzeugabschnitt 201 auf, der mit dem Teilwerkzeug 3 in Rotation versetzbar ist und auf seiner Umfangsfläche 203 mit mindestens einer Schneidplatte 205 versehen ist, die eine nach links weisende Schneide 207 umfaßt, die in einem Winkel zur Drehachse 9 verläuft und der Bearbeitung des Ventilsitzes dient.

Innerhalb des Werkzeugabschnitts 201 ist ein in Richtung der Drehachse 9 verlagerbar gelagerter Werkzeugabschnitt 209 vorgesehen, der ein bekanntes Ventilstechwerkzeug beziehungsweise eine Reibahle darstellt. Der Werkzeugabschnitt 209 ist mit dem hier gestrichelt dargestellten Teilwerkzeug 5 so gekoppelt, daß bei einer Verlagerung des Teilwerkzeugs 5 eine Verlagerung des Werkzeugabschnitts 209 gegeben ist. Dieser weist auf seiner Umfangsfläche hier eine Messerplatte 211 auf, die der Bearbeitung der Ventilführung dient. Es ist möglich, die Werkzeugabschnitte 201 und 209 mit einer oder mehreren Führungsleisten zu versehen, um die Qualität und Maßhaltigkeit der bearbeiteten Oberflächen zu gewährleisten.

Gestrichelt sind in Figur 6 der Bereich der Ventilführung 213 und des Ventilsitzes 215 angedeutet.

Entsprechend der Darstellung in Figür 1, in der das Teilwerkzeug 5 gegenüber dem Teilwerkzeug 3 in seiner ausgefahrenen Position dargestellt ist, ist auch der Werkzeugabschnitt 209 gegenüber dem Werkzeugabschnitt 201 des Spezialwerkzeugs 200 ausgefahren.

Aus den Erläuterungen zu Figur 6 ist ohne weiteres ersichtlich, daß das hier beschriebene Spezialwerkzeug 200 problemlos mit einem Werkzeug 10 kombiniert werden kann, das anhand von Figur 3 näher beschrieben wurde.

Die Funktion des Spezialwerkzeugs 200, das der Bearbeitung von Ventilsitzen und -führungen in einem Motor einer Brennkraftmaschine dient, ist grundsätzlich bekannt. Zur Funktion dieses Spezialwerkzeuges und des anhand der Figuren 1 bis 3 dargestellten Werkzeuges 1 beziehungsweise 10 wird daher hier nur noch folgendes wiedergegeben:

Während der Bearbeitung des Ventilsitzes dreht sich das Werkzeug 1 und damit das Spezialwerkzeug 200 mit einer ersten Drehzahl, die beispielsweise 1000 U/min betragen kann. Die bei dieser Drehzahl auf die anhand der Figuren 1 bis 3 näher erläuterten Steuerelemente 19 und 19' wirkenden Fliehkräfte reichen nicht aus, einen so großen Druck in der Ausnehmung 13 aufzubauen, daß die Kolbeneinrichtung 15 nach links verlagert würde. Die auf die Kolbeneinrichtung 15 wirkenden Rückstellkräfte sind also so groß, daß sich das zweite Teilwerkzeug 5 und damit der Werkzeugabschnitt 209 in seiner zurückgezogenen Position befindet. Der Kolben 15 ist also -entgegen der Darstellung in den Figuren 1 und 3-ganz nach rechts verlagert, so daß das zweite Teilwerkzeug 5 und der Werkzeugabschnitt 209 in ihrer eingezogenen Position angeordnet sind.

Nach Abschluß der Bearbeitung des Ventilsitzes 215 wird das Werkzeug 1 etwas zurückgezogen, so daß der fertig bearbeitete Ventilsitz nicht mehr mit dem ersten Werkzeugabschnitt 201 beziehungsweise der Schneide 207 in Berührung tritt. Nun wird die Drehzahl des Werkzeugs wesentlich erhöht, beispielsweise auf 4000 bis 5000 U/min. Bei dieser Drehzahl wirken derartig hohe Fliehkräfte auf die Steuerelemente 19, 19', daß die Kolbeneinrichtung 15 gegen den im Ausgleichsraum 29 beziehungsweise 29' herrschenden Druck nach links verlagert wird, wodurch das zweite Teilwerkzeug 5 und damit der Werkzeugabschnitt 209 eine Relativbewegung gegenüber dem ersten Teilwerkzeug ausführt und in seine ausgefahrene Position gelangt. Durch die Relativbewegung des zweiten Teilwerkzeugs 5 wird das Ventilstechwerkzeug beziehungsweise der Werkzeugabschnitt 209 in die der Ventilführung dienende Bohrung eingefahren, wobei die Bohrungsoberfläche fur die Ventilführung 213 bearbeitet wird. Durch die oben anhand der Figuren 1 bis 3 beschriebenen Drosseln ist sichergestellt, daß die Vorschubbewegung gleichmäßig erfolgt. Sobald die Ventilführung fertig bearbeitet ist, wird die Drehzahl des Werkzeugs wesentlich reduziert, so daß die Kolbeneinrichtung 15 und damit die Steuerelemente 19, 19' durch die Rückstellkräfte zurückgefahren werden, so daß das zweite Teilwerkzeug 5 beziehungsweise der Werkzeugabschnitt 209 ebenfalls zurückgeführt und aus der Ventilführung herausgefahren wird. Durch den Einsatz der Rückschlagventile ist die Rückführungsbewegung wesentlich schneller als die Vorschubbewegung während der Bearbeitung der Ventilführungsfläche.

Aus den Erläuterungen zum Spezialwerkzeug 200 wird ohne weiteres ersichtlich, daß das anhand der Figuren 1 bis 3 beschriebene Werkzeug 1 beziehungsweise 10 mit herkömmlichen Werkzeugen kombiniert werden kann. Wesentlich ist also, daß auf einfache Weise eine axiale-Verlagerung eines Teilwerkzeugs gegenüber einem anderen Teilwerkzeug realisiert werden kann, wobei ausschließlich Fliehkräfte zur Erzeugung der Relativbewegung ausgenutzt werden. Es bedarf also keiner zusätzlichen Steuerungselemente, beispielsweise sogenannter Steuerstangen oder in das Werkzeug integrierter Motoren, um die Relativbewegung durchzuführen. Das Werkzeug ist daher sehr verschleißarm und weist eine geringe Störungsanfälligkeit auf.

Durch die Kombination verschiedener Bewegungswege in axialer und radialer Richtung konnen sehr unterschiedliche Werkzeuge realisiert werden, wobei auch Steuerelemente herangezogen werden, die sowohl eine radiale als auch eine axiale Relativbewegung bewirken. Auch sind Relativbewegungen unter beliebigen Winkeln zur Drehachse der Werkzeuge realisierbar.

Aus der Funktion der Steuerelemente ist ohne weiteres ersichtlich, daß die Anzahl der Steuerelemente an den Verwendungsfall angepaßt werden kann. Um die Auswuchtung von Werkzeugen zu vereinfachen, werden vorzugsweise drei Steuerelemente verwendet, die in gleichem Umfangsabstand zueinander in den Grundkörper des Werkzeugs eingesetzt sind. Es ist aber, wie anhand der Figuren 1 bis 3 ersichtlich, auch ohne weiteres möglich, mit zwei Steuerelementen eine Relativbewegung zweier Teilwerkzeuge zueinander zu bewirken, oder, wie anhand der Figuren 4 und 5 gezeigt, lediglich ein Steuerelement fur eine derartige Relativbewegung einzusetzen.

## Patentansprüche

1. Werkzeug zur spanabtragenden Bearbeitung von Werkstückoberflächen, insbesondere von Bohrungsoberflächen, mit mindestens zwei gegeneinander verlagerbaren Teilwerkzeugen, wobei das Werkzeug zur Bearbeitung der Werkstückoberflächen in Rotation versetzbar ist, **dadurch gekennzeichnet, daß** mindestens ein gegenüber dem Werkzeug (1, 10, 100) im wesentlichen senkrecht zur Drehachse des Werkzeuges verlagerbares Steuerelement (19, 119) vorgesehen ist, das ab einer vorgegebenen Grenzdrehzahl eine Relativbewegung eines Teilwerkzeuges gegenüber dem anderen bewirkt, wobei das Steuerelement mit einem Federelement zusammenwirkt, das eine Gasdruckfeder umfaßt, und daß eine vorbestimmte und einstellbare, der Fliehkraft entgegenwirkende Rückstellkraft auf das Steuerelement ausübt.

2. Werkzeug nach Anspruch 1, **dadurch gekennzeichnet, daß** das Steuerelement (19;119) mit einem Steuermedium, vorzugsweise mit einem öl, zusammenwirkt, und bei einer Verlagerung innerhalb des Werkzeugs eine Strömung des Steuermediums verursacht.

3. Werkzeug nach einem der vorhergehenden Ansprüche, **dadurch gekennzeichnet**, däß im Strömungspfad des Steuermediums ein hydraulischer Widerstand (Drossel (35;135)) vorgesehen ist.

4. Werkzeug nach einem der vorhergehenden Ansprüche, **dadurch gekennzeichnet, daß** im Strömungspfad des Steuermediums ein Rückschlagventil (37;137) vorgesehen ist.

5. Werkzeug nach einem der vorhergehenden Ansprüche, **dadurch gekennzeichnet, daß** das Federelement unmittelbar oder über ein Medium, vorzugsweise ein Fluid, auf das Steuerelement wirkt.

6. Werkzeug nach einem der vorhergehenden Ansprüche, **dadurch gekennzeichnet, daß** drei Steuerelemente vorgesehen sind.

7. Werkzeug nach einem der vorhergehenden Ansprüche, **dadurch gekennzeichnet, daß** das Steuerelement (119) unmittelbar eine Verlagerung des einen Teilwerkzeugs (5) gegenüber dem anderen (3) bewirkt.

8. Werkzeug nach einem der vorhergehenden Ansprüche, **dadurch gekennzeichnet, daß** das Steuerelement (19) über ein Medium, vorzugsweise ein Fluid, eine Verlagerung des einen Teilwerkzeugs (5) gegenüber dem anderen (3) bewirkt.

9. Werkzeug nach einem der vorhergehenden Ansprüche, **dadurch gekennzeichnet, daß** das Steuerelement (19) mit einer Kolbeneinrichtung (15) zusammenwirkt, die eine Verlagerung des einen Teilwerkzeugs (5) gegenüber dem anderen (3) bewirkt.

10. Werkzeug nach einem der vorhergehenden Ansprüche, **dadurch gekennzeichnet, daß** die Kolbeneinrichtung (15) einerseits mit dem Steuermedium beaufschlagt wird.

11. Werkzeug nach einem der vorhergehenden Ansprüche, **dadurch gekennzeichnet, daß** die Kolbeneinrichtung (15) andererseits mit einer dem Steuermedium entgegenwirkenden Federelement zusammenwirkt.

12. Werkzeug nach einem der vorhergehenden Ansprüche, **dadurch gekennzeichnet, daß** das Steuerelement (119) Teil einer in das Werkzeug einsetzbaren Montageeinheit (163) ist.

13. Werkzeug nach einem der vorhergehenden Ansprüche, **dadurch gekennzeichnet, daß** das Steuerelement (19;119) ein unter Wirkung der Fliehkraft verlagerbarer Körper ist.

14. Verwendung eines Werkzeugs nach einem der Ansprüche 1 bis 13 zur Bearbeitung des Ventilsitzes (215) und der Ventilführung (213) im Motor einer Brennstoffmaschine.

15. Verwendung eines Werkzeugs nach einem der Ansprüche 1 bis 13 zum Plandrehen.

16. Einsatz mit einem Teilwerkzeug für ein Werkzeug nach einem der Ansprüche 1 bis 13, **gekennzeichnet durch** ein Steuerelement, das unter Einwirkung äußerer Kräfte, insbesondere von Fliehkräften, beweglich ist und der Verlagerung des Teilwerkzeugs dient.

## Claims

1. Tool for the machining of workpiece surfaces, especially of drilled-holed surfaces, having at least two part-tools which are displaceable relative to one another, the tool for the machining of the workpiece surfaces being capable of being caused to rotate, **characterized in that** at least one control member (19, 119) is provided which is displaceable relative to the tool (1, 10, 100) substantially perpendicularly to the axis of rotation of the tool, which control member, from a preset threshold speed of rotation, effects a movement of one part-tool relative to the other, the control member interacting with a spring member which comprises a gas pressure spring, and **in that** a predetermined and adjustable restoring force, counteracting the centrifugal force, is exerted on the control member.

2. Tool according to Claim 1, **characterized in that** the control member (19; 119) interacts with a control medium, preferably with an oil, and causes a flow of the control medium in the event of a displacement within the tool.

3. Tool according to one of the preceding claims, **characterized in that** a hydraulic resistance (throttle (35; 135)) is provided in the flow path of the control medium.

4. Tool according to one of the preceding claims, **characterized in that** a return valve (37; 137) is provided in the flow path of the control medium.

5. Tool according to one of the preceding claims, **characterized in that** the spring member acts on the control member directly or via a medium, preferably a fluid.

6. Tool according to one of the preceding claims, **characterized in that** three control members are provided.

7. Tool according to one of the preceding claims, **characterized in that** the control member (119) directly effects a displacement of one part-tool (5) relative to the other (3).

8. Tool according to one of the preceding claims, **characterized in that** the control member (19) effects a displacement of one part-tool (5) relative to the other (3) via a medium, preferably a fluid.

9. Tool according to one of the preceding claims, **characterized in that** the control member (19) interacts with a piston device (15) which effects a displacement of one part-tool (5) relative to the other (3).

10. Tool according to one of the preceding claims, **characterized in that** the piston device (15) is subjected on one side to the action of the control medium.

11. Tool according to one of the preceding claims, **characterized in that** the piston device (15) interacts on the other side with a spring member counteracting the control medium.

12. Tool according to one of the preceding claims, **characterized in that** the control member (119) is part of an assembly unit (163) which can be inserted into the tool.

13. Tool according to one of the preceding claims, **characterized in that** the control member (19; 119) is a body which is displaceable under the action of the centrifugal force.

14. Use of a tool according to one of Claims 1 to 13 for the machining of the valve seat (215) and the valve guide (213) in the engine of a fuel-powered machine.

15. Use of a tool according to one of Claims 1 to 13 for facing.

16. Insert with a part-tool for a tool according to one of Claims 1 to 13, **characterized by** a control member which is movable under the action of external forces, especially of centrifugal forces, and serves to displace the part-tool.

## Revendications

1. Outil pour l'usinage par enlèvement de copeaux de surfaces de pièces, notamment de surfaces de perçage, comprenant au moins deux parties d'outil mobiles l'une par rapport à l'autre, l'outil pour l'usinage de surfaces de pièces étant mis en rotation,
**caractérisé par**
au moins un élément de commande (19, 119) mobile par rapport à l'outil (1, 10, 100) essentiellement perpendiculairement à l'axe de rotation de l'outil, élément de commande qui, à partir d'une certaine vitesse de rotation limite, produit un mouvement relatif d'une partie de l'outil par rapport à l'autre, l'élément de commande coopérant avec un élément de ressort qui comprend un ressort à gaz et exerce une force de rappel prédéterminée et réglable, s'opposant à la force centrifuge sur l'élément de commande.

2. Outil selon la revendication 1,
**caractérisé en ce que**
l'élément de commande (19, 119) coopère avec un milieu de commande, de préférence une huile, et lors d'un déplacement dans l'outil, il produit un écoulement du milieu de commande.

3. Outil selon l'une quelconque des revendications précédentes,
**caractérisé par**
une résistance hydraulique (organe d'étranglement 35 ; 135) prévue dans le chemin de passage du milieu de commande.

4. Outil selon l'une quelconque des revendications précédentes,
**caractérisé en ce qu'**
un clapet anti-retour (37 ; 137) est prévu dans le chemin de passage du milieu de commande.

5. Outil selon l'une quelconque des revendications précédentes,
**caractérisé en ce que**
l'élément de ressort agit directement ou par l'intermédiaire d'un milieu, de préférence un liquide, sur l'élément de commande.

6. Outil selon l'une quelconque des revendications précédentes,
**caractérisé par**
trois éléments de commande.

7. Outil selon l'une quelconque des revendications précédentes,
**caractérisé en ce que**
l'élément de commande (119) produit directement un déplacement d'un outil partiel (5) par rapport à l'autre (3).

8. Outil selon l'une quelconque des revendications précédentes,
**caractérisé en ce que**
l'élément de commande (19) produit par l'intermédiaire d'un milieu, notamment d'un liquide, un déplacement d'une partie d'outil (5) par rapport à l'autre (3).

9. Outil selon l'une quelconque des revendications précédentes,
**caractérisé en ce que**
l'élément de commande (19) coopère avec une installation à piston (15) produisant un déplacement d'une partie d'outil (5) par rapport à l'autre (3).

10. Outil selon l'une quelconque des revendications précédentes,
**caractérisé en ce que**
l'installation à pistons (15) est sollicitée d'un côté par le milieu de commande.

11. Outil selon l'une quelconque des revendications précédentes,
**caractérisé en ce que**
l'installation à pistons (15) coopère par son autre côté avec un élément de ressort qui s'oppose au milieu de commande.

12. Outil selon l'une quelconque des revendications précédentes,
**caractérisé en ce que**
l'élément de commande (119) fait partie d'une unité de montage (163) qui s'installe dans l'outil.

13. Outil selon l'une quelconque des revendications précédentes,
**caractérisé en ce que**
l'élément de commande (19, 119) est un organe déplaçable sous l'effet de la force centrifuge.

14. Application d'un outil selon l'une quelconque des revendications 1 à 13 pour l'usinage du siège de soupape (215) et du guidage de soupape (213) d'un moteur à combustion interne.

15. Application d'un outil selon l'une des revendications 1 à 13 pour la rectification.

16. Utilisation d'une partie d'outil dans un outil selon l'une des revendications 1 à 13,
**caractérisée par**
un élément de commande qui, sous l'effet de forces extérieures notamment de forces centrifuges, est mobile et sert au déplacement de la partie d'outil.
